Europäisches Patentamt

**European Patent Office**

**Office européen des brevets**

(11) Publication number: **0 218 394**
A2

## (12) EUROPEAN PATENT APPLICATION

(21) Application number: **86307143.7**

(22) Date of filing: **17.09.86**

(51) Int. Cl.⁴: **F 16 J 15/32**

(30) Priority: **27.09.85 GB 8523892**

(43) Date of publication of application: **15.04.87**
**Bulletin 87/16**

(84) Designated Contracting States: **AT BE CH DE FR IT LI NL SE**

(71) Applicant: **J.H. FENNER & CO. LIMITED, Marfleet, Hull North Humberside, HU9 5RA (GB)**

(72) Inventor: **Potter, Charles William, 23 Orchid Street, Harpurhey Manchester M9 1XX (GB)**

(74) Representative: **Funge, Harry et al, M'CAW & CO. 41-51 Royal Exchange Cross Street, Manchester M2 7BD (GB)**

(54) **Fluid seals.**

(57) The invention proposes a fluid seal comprising a flexible sealing lip (12) of polytetrafluorethylene supported in a housing (11), the sealing lip (12) being loaded into sealing engagement with the surface to be sealed by resilient loading means (13) located between the housing and sealing lip, the loading means being captive in the housing under conditions of axial pressure which give rise to radial loading of the lip.

## FLUID SEALS

The invention concerns fluid seals, and has particular, though not exclusive reference to oil seals wherein the sealing element comprises a thin shell of polytetrafluorethylene (P.T.F.E.).

Oil seals are known wherein the PTFE sealing element is directly loaded by a garter spring, such an arrangement being shown in our prior U.K. Patent No. 2096246.

The object of the present invention is to provide an alternative to the garter spring aforesaid as a means for loading the sealing element.

According to the present invention there is proposed a fluid seal comprising a housing, a flexible sealing element seated in said housing and presenting a sealing lip extending in the axial direction of the seal, and a resilient loading means captively located in the housing under conditions of axial pressure, the loading means extending between the back of the sealing lip and a reaction surface arranged in opposed disposition relative thereto and the axial pressure applied to the loading means giving rise to a radial loading of the sealing element.

According to a preferred feature, the loading means includes spaced parallel ribs in contact with the reaction surface and/or the sealing lip and through which pressure is applied to the sealing lip.

The invention will now be described further, by way of example only, with reference to the accompanying diagrammatic drawings illustrating several embodiments thereof, and in which : -

Fig. 1 is a transverse cross-section taken through a first form of the invention;

Fig. 2 is a corresponding view of a modified form of the seal shown in Fig. 1;

Fig. 3 is a transverse cross-section taken through a seal embodying an alternative form of loading means to that shown in Figs. 1 and 2;

Fig. 4 is a view corresponding to Fig. 3, and illustrates a modified form of the seal shown therein; and

Fig. 5 is a scrap view of the flattened tube of knitted construction present in the embodiments illustrated in Figs. 3 and 4.

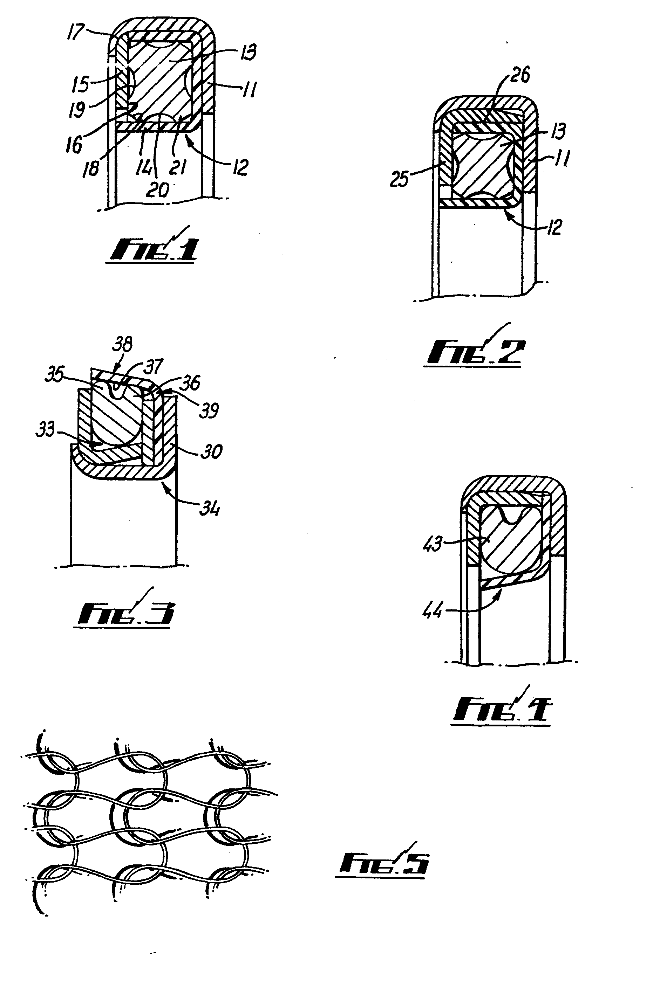

Referring now to the drawings, and particularly to Fig. 1 thereof, a fluid seal comprises an annular casing 11 of generally L-shaped transverse cross-section, a moulded, annular P.T.F.E. sealing element 12 of channel section seated in said casing, the channel section being open in the axial direction of the seal, a resilient loading ring 13 positioned within the sealing element 12 to exert a sealing pressure on the radially inner shaft engaging limb 14 of the sealing element, and a retaining washer 15 abutting a side face 16 of the loading ring 13, the edge of the casing 11 being pressed radially inwardly, at 17, to overlie the outer peripheral edge    of the retaining washer 15 and thus hold the sealing element 12, loading ring 13 and washer 15 in captive engagement with the casing 11.

0218394

15385 A
18.7.86

3

The sealing element 12 comprises a thin annulus of a P.T.F.E. material, having a typical thickness of between 0.5 and 1.0 mm, moulded to the channel-shaped form illustrated in the drawing, the radially outer limb of the U-shaped element being of a lesser dimension than the essentially parallel, inner rim, and being dimensioned to be in close fit in the casing in the closed condition thereof.

The loading ring 13 is of comparable form to the elastomeric sealing ring disclosed in U.K. Patent Specification No. 1148885, and the dimension thereof in relation to the dimensions of the casing 11 are such as to give rise to a compression of the loading ring 13 in the axial direction of the seal on securing of the washer 15 relative to the casing, and a consequential loading of the P.T.F.E. sealing element radially inwardly of the seal. The loading ring 13 is thus of basically square cross-section and has chamfered corners 18, the two opposite radial faces 19 of the ring and the two opposite axial faces 20 having arcuate recesses therein, thus defining respective pairs of lips, at the radially inner and outer peripheries of the ring.

That axial compression of the loading ring 13 which arises on assembly of the seal gives rise to a radial loading of the sealing element 12 along the respective lines of contact of the radially inner lips 21 of the loading ring 13 and the back of the sealing portion 14 of the sealing element 12, the radially outer lips being in contact with the casing which thus provides a reaction surface for the sealing forces involved.

15385A
18.7.86

4

The embodiment shown in Fig. 2 differs from that of Fig. 1 only as regards the presence of a washer of angle section the radially outer limb of the sealing element engaging the cylindrical inner face 26 of the washer and providing for relative rotational movement between the sealing element 12, on the one hand, and both the shaft and housing (as represented by the casing) on the other.

It is to be appreciated that seals analogous to those shown in Figs. 1 and 2 may be provided for application to a fixed shaft, those illustrated being intended for use in the context of rotary shafts.

As an alternative to the loading means utilised in the embodiment shown in Figs. 1 and 2, such means may comprise a ribbon of a tubular knitted fabric arranged in flattened form, the ribbon being folded about its longitudinal axis, to give a transverse cross-section of generally U-shape and the ends of the ribbon being brought into abutment to give a loop for location within a seal casing in analogous manner to the elastimeric loading means of the previous embodiments. Fig. 5 is a scrap view of the flattened circular knit fabric.

In the embodiment shown in Fig. 3, the seal being intended for application to a stationary shaft, the loading means 33 is disposed within the casing 30 with the parallel limbs 35, 36 thereof directed towards and engaged with the rear face 37 of the sealing part 38 of the sealing element 39, such loading means thus applying pressure to the sealing element along two spaced parallel lines.

In the arrangement shown in Fig. 4 the loading means 43 is oppositely directed relative to the sealing element 44, and engages such element along a single line (or band), rather than at the spaced locations of the embodiment shown in Fig. 3.

As with the embodiments shown in Figs. 1 and 2, so too in the case of the other embodiments is an axial loading, as imparted to the loading means on assembly of the seal, used to apply a radial pressure to a sealing element.

The knitted fabric, which fabric is disclosed in U.K. Patent Application No. 8523893 is of stainless steel wire, the interlocking loops of the fabric providing an even radial loading to the sealing element throughout the full peripheral extent of the contact between the fabric and sealing element and acting as a multiplicity of minute individual springs capable of accommodating displacements arising from shaft deflections.

It is to be appreciated that the seals as aforesaid are of application in the context of rotational or reciprocatory motion, or a combination thereof.

15385A         6
18.7.86

Claims

1.        A fluid seal comprising a housing, a flexible sealing element seated in said housing and presenting a sealing lip extending in the axial direction of the seal, and a resilient loading means captively located in the housing under conditions of axial pressure, the loading means extending between the back of the sealing lip and a reaction surface arranged in opposed disposition relative thereto and the axial pressure applied to the loading means giving rise to a radial loading of the sealing element.

2.        A fluid seal as claimed in claim 1, wherein the loading means includes spaced parallel ribs in contact with the reaction surface and/or the sealing lip and through which pressure is applied to the sealing lip.

3.        A fluid seal as claimed in claim 1 or 2, wherein the loading means comprises a loading ring of an elastomeric material, said loading ring being of generally square transverse cross section and having chamfered corners and recessed faces.

4.        A fluid seal as claimed in claim 1 or 2, wherein the loading means comprises a ribbon of U-shaped transverse cross-section arranged in annular form, the ribbon being defined by a flattened tubular-knitted fabric.

5.        A fluid seal as claimed in claim 4, wherein the tubular knitted fabric is metallic in character.

6.        A fluid seal as claimed in claim 5, wherein the tubular knitted fabric comprises stainless steel wire.

7.        A fluid seal as claimed in any one of the preceding claims, wherein the sealing lip comprises a polytetrafluorethylene sealing element.

8.        A fluid seal as claimed in claim 7, wherein the sealing lip is of channel section, said channel section being open in the axial direction of the seal.

9.        A fluid seal as claimed in claim 7 or 8, wherein the sealing element comprises a thin annular shell of moulded construction.

10.        A fluid seal as claimed in any one of the preceding claims wherein the housing includes a casing and a retaining element captively engaged therewith and serving axially to compress the resilient loading means.

11.        A fluid seal as claimed in claim 10, wherein the retaining element comprises a washer of angular transverse cross-section, said washer having radial and cylindrical portions and the cylindrical portion being disposed adjacent the inner surface of a cylindrical part of the casing.

**FIG.1**

**FIG.2**

**FIG.3**

**FIG.4**

**FIG.5**